# EUROPEAN PATENT SPECIFICATION

(11) **EP 3 401 507 B1**
(45) Date of publication and mention of the grant of the patent: **07.07.2021**
(21) Application number: 18170527.8
(22) Date of filing: 03.05.2018
(51) Int. Cl.: F01D 5/18

(54) **AIRFOIL FOR A TURBINE COMPRISING AN IMPINGEMENT INSERT**
TURBINENSCHAUFEL UMFASSEND EINEN PRALLEINSATZ
AUBE POUR TURBINE COMPRENANT UN INSERT D'IMPACT

(30) Priority: 09.05.2017 US 201715590512
(43) Date of publication of application: 14.11.2018
(73) Proprietor: General Electric Company, Schenectady, NY 12345 (US)
(72) Inventor: DUTTA, Sandip, Greenville, SC South Carolina 29615 (US); WEBER, Joseph Antony, Greenville, SC South Carolina 29615 (US); LACY, Benjamin Paul, Greenville, SC South Carolina 29615 (US)
(74) Representative: BRP Renaud & Partner mbB Rechtsanwälte Patentanwälte Steuerberater

(56) References cited:
- WO-A1-2016/036366
- JP-A- 2010 174 688
- US-A1- 2015 226 085
- US-A1- 2016 333 735
- US-A1- 2016 348 536
- US-A1- 2017 030 201
- US-A1- 2017 051 612
- US-A1- 2017 067 636
- US-B2- 9 435 536

## Description

### FIELD OF THE INVENTION

The present invention is directed to articles for thermal management of turbine components. More particularly, the present invention is directed to articles for thermal management of turbine components including impingement flow modification structures.

### BACKGROUND OF THE INVENTION

Gas turbines airfoils such as nozzles are subjected to intense heat and external pressures in the hot gas path. These rigorous operating conditions are exacerbated by advances in the technology, which may include both increased operating temperatures and greater hot gas path pressures. As a result, gas turbine airfoils are sometimes cooled by flowing a fluid through a manifold inserted into the core of the airfoil. The fluid then exits the manifold through impingement holes into a post-impingement cavity, and subsequently exits the post-impingement cavity through apertures in the exterior wall of the airfoil, forming a film layer of the fluid on the exterior of the airfoil.

However, crossflow in the post-impingement cavity, and non-optimized flow paths inhibit fluid cooling in the post-impingement cavity. The rigorous operating conditions, materials and manufacturing techniques have maintained or even exacerbated crossflow in the post-impingement cavity, laminar flow of the cooling fluid and non-optimized flow paths.

US 2016/0348536 A1 relates to an article, component and method of forming an article. US 2017/0067636 A1 relates to an article and method of forming an article. US 2017/051612 teaches inserts for airfoils and airfoils comprising the inserts. The inserts may comprise a plurality of cooling holes and cooling fins including a directional nozzle. The directional nozzle directs the flow of the cooling fluid in any suitable direction into a post-impingement cavity.

### BRIEF DESCRIPTION OF THE INVENTION

According to the invention, a component for a turbine as set forth in claim 1 is provided.

Other features and advantages of the present invention will be apparent from the following more detailed description, taken in conjunction with the accompanying drawings which illustrate, by way of example, the principles of the invention.

### BRIEF DESCRIPTION OF THE DRAWINGS

FIG. 1 is a side view of an airfoil, according to an embodiment.
FIG. 2 is a side view of an airfoil with an impingement insert, according to an embodiment.
FIG. 3 is a side view of an impingement fin, according to an embodiment.
FIG. 4 is a top view of an impingement fin, according to an embodiment.
FIG. 5 is a side view of a surface of the impingement insert, according to an embodiment.
FIG. 6 is a side view of a surface of the impingement insert, according to an embodiment.
FIG. 7 is a top view of a surface of the impingement insert, according to an embodiment.
FIG. 8 is a top view of a surface of the impingement insert, according to an embodiment.
FIG. 9 is a top view of a surface of the impingement insert, according to an embodiment.
FIG. 10 is a top view of a surface of the impingement insert, according to an embodiment.
FIG. 11 is a side view of a surface of the impingement insert, according to an embodiment.
FIG. 12 is a side view of a surface of the impingement insert, according to an embodiment.
FIG. 13 is a side view of an impingement fin, according to an embodiment.
FIG. 14 is a top view of a surface of the impingement insert, according to an embodiment.

Wherever possible, the same reference numbers will be used throughout the drawings to represent the same parts.

### DETAILED DESCRIPTION OF THE INVENTION

Provided is an article useful as a component of a turbine. Embodiments of the present disclosure, for example, in comparison to concepts failing to include one or more of the features disclosed herein, increase the cooling effectiveness of cooling features, provide more uniform coolant flow, increase cooling efficiency, increase wall temperature consistency, increase cooling surface area with decreased fluid flow, decrease or eliminate over cool regions, provide varied heat transfer within the article, facilitate the use of increased system temperatures, and combinations thereof.

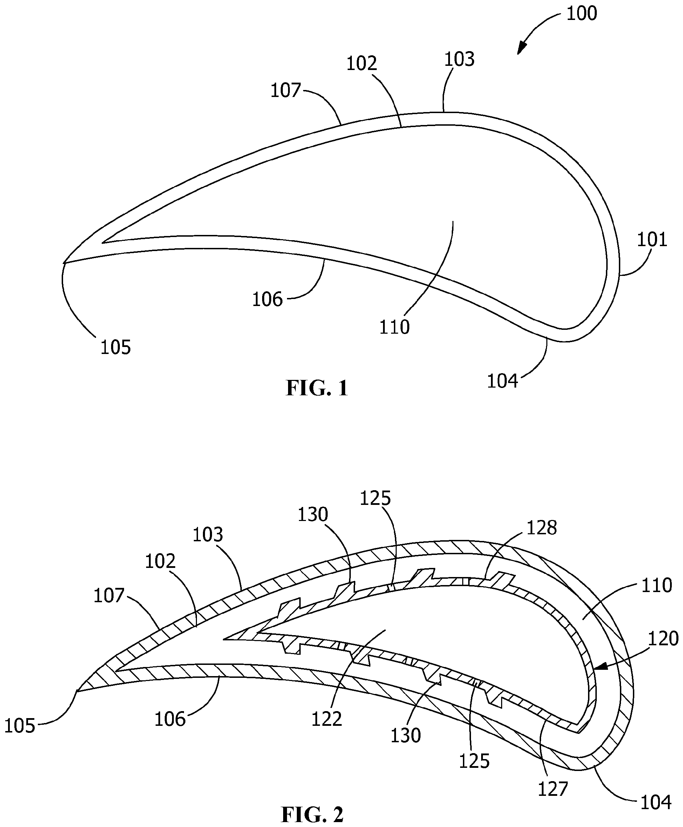

Referring to FIGS. 1 and 2, in an embodiment, a component 100 including an airfoil 101 having an internal surface 102, an external surface 103, a leading edge 104, a trailing edge 105, a pressure side 106, a suction side 107, and an internal impingement cavity 110 defined by the internal surface 102. The airfoil 101 is configured to receive a fluid from an external source (e.g. a turbine system) and direct the fluid into the impingement cavity 110. The airfoil 101 is additionally configured to discharge the fluid from the impingement cavity 110 to an external environment. An impingement insert 120 is secured within the impingement cavity 110. The impingement insert 120 includes an internal region 122, a plurality of impingement cooling holes 125 spaced along a first face 127 of the impingement insert 120, and a plurality of impingement fins 130, spaced along the first face 127 of the impingement insert 120. The impingement fins 130 are spaced apart from the impingement cooling holes 125. The impingement insert 120 is configured to allow the received fluid to move between the internal region 122 of the impingement insert 120 and the impingement cavity 110 via the impingement cooling holes 125.

The received fluid is typically at a temperature lower than a temperature on the external surface 103 of the airfoil 101. The interaction between the fluid and the surfaces of the airfoil 101 and impingement insert 120 provides a mechanism to redistribute heat throughout the component 100 to obtain a more uniform temperature distribution throughout the component 100. A more uniform temperature distribution can reduce thermal stress and increase the component 100 service life.

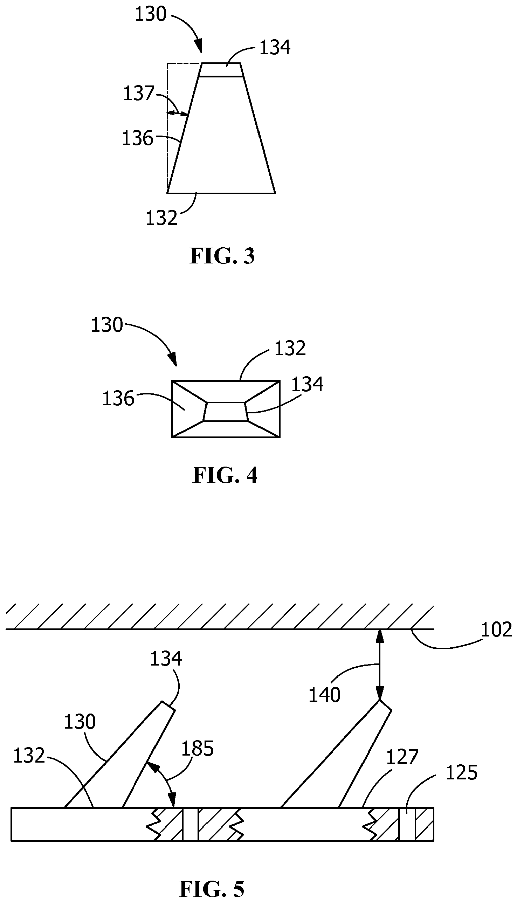

Referring to FIGS. 3 and 4, in an embodiment, the impingement fins 130 includes a base 132, a tip 134 opposite the base 132 and at least one side 136 between the base 132 and tip 134. The base 132 is rectangular. In some embodiments, a plurality of bases may be attached to the impingement fin 130 at a plurality of angles. In an embodiment, a width of the base 132 of the impingement insert 120 is between 0.5 millimeters to 2.0 millimeters. In some embodiments, the base 132 and the tip 134 are both rectangular. In some embodiments, the at least one side 136 may be tapered from the base 132 to the tip 134 of the impingement fin 130. In some embodiments, an angle of the taper 137 is between 3 degrees and 10 degrees, between 4 degrees and 6 degrees, and/or about 5 degrees.

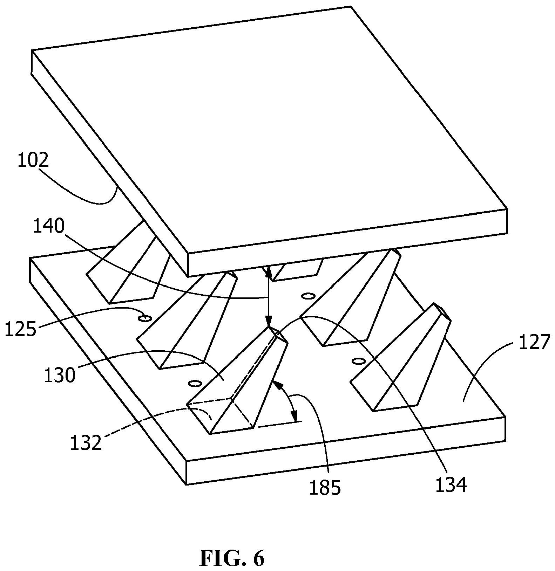

Referring to FIGS. 5 and 6, in an embodiment, the impingement fins 130 are attached to the impingement insert 120 in a spaced apart configuration from the cooling holes 125. In some embodiments, the impingement fins 130 extend from the impingement insert 120 at an angle 185. Angled impingement fins 130 increase recirculation of the fluid between first face 127 and the impingement insert 120. The angled impingement fins 130 also increase the surface area of the impingement insert 120 for heat transfer. The increased surface area and the increased interaction of the fluid with the materials of the impingement fins 130 and first face 127 can increase the heat transfer between the fluid and the impingement insert 120 thereby reducing the amount of fluid needed to regulate the temperature. In some embodiments, a heat transfer coefficient is increased by at least 10 percent, up to about 20 percent, and combinations thereof. In some embodiments, the angle 185 is greater than about 30 degrees, greater than about 40 degrees, about 45 degrees, less than about 50 degrees, less than about 60 degrees and combinations thereof.

In some embodiments, the tip 134 of the impingement fin 130 is spaced apart from the internal surface 102 of the airfoil 101. In an embodiment, a clearance 140 between the tip 134 of the at least one impingement fin 130 and the internal surface 102 of the airfoil 101 is between 0.5 millimeters and 2.0 millimeters.

In some embodiments, the base 132 of the impingement fin 130 may be attached to the impingement insert 120 by welding, brazing, laser welding, friction welding, ultrasonic welding, additive manufacturing, and combinations thereof. In an embodiment, the impingement fin 130 is attached by additive manufacturing. In an embodiment, the impingement fin 130 is integral to the impingement insert 120. In an embodiment, the impingement fin 130 is formed by additive manufacturing integral to the impingement insert 120.

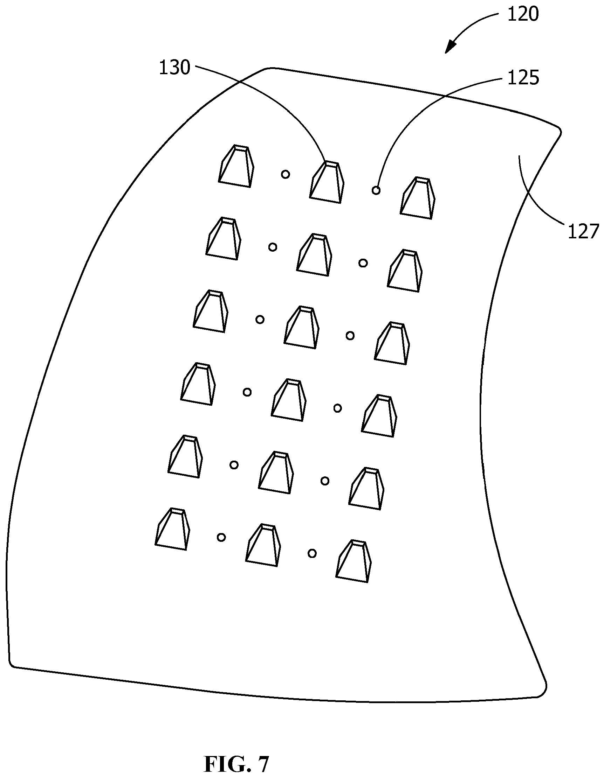

Referring to FIG. 7, in an embodiment, the impingement fins 130 and impingement cooling holes 125 are substantially aligned in single rows on the first face 127 of the impingement insert 120.

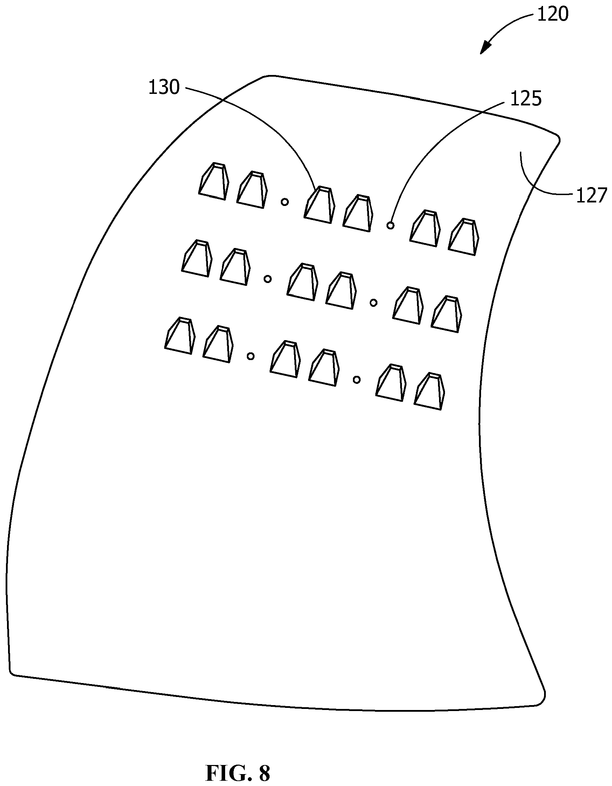

Referring to FIG. 8, in an embodiment, a single row of the impingement cooling holes 125 are substantially aligned with a substantially aligned double row of the impingement fins 130 on the first face 127 of the impingement insert 120.

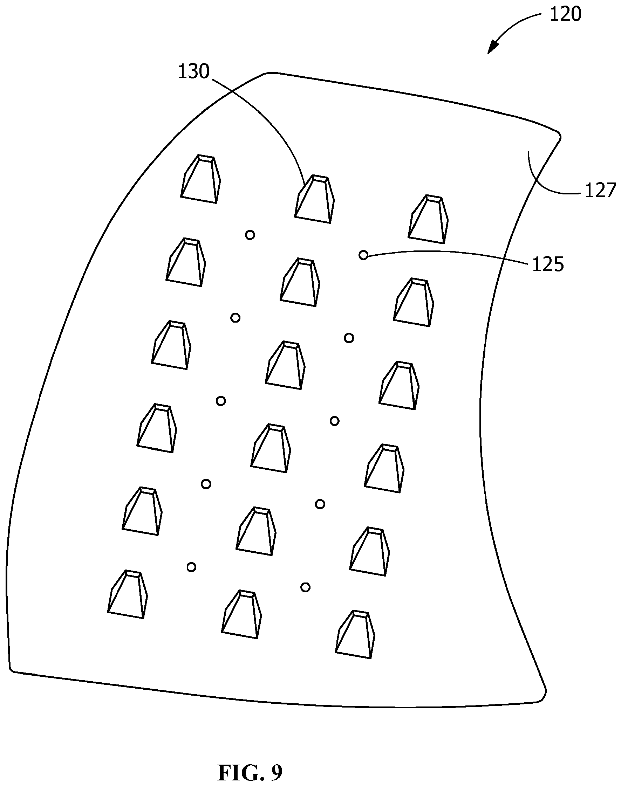

Referring to FIG. 9, in an embodiment, a single row of the impingement cooling holes 125 are offset with a single row of the impingement fins 130 on the first face 127 of the impingement insert 120.

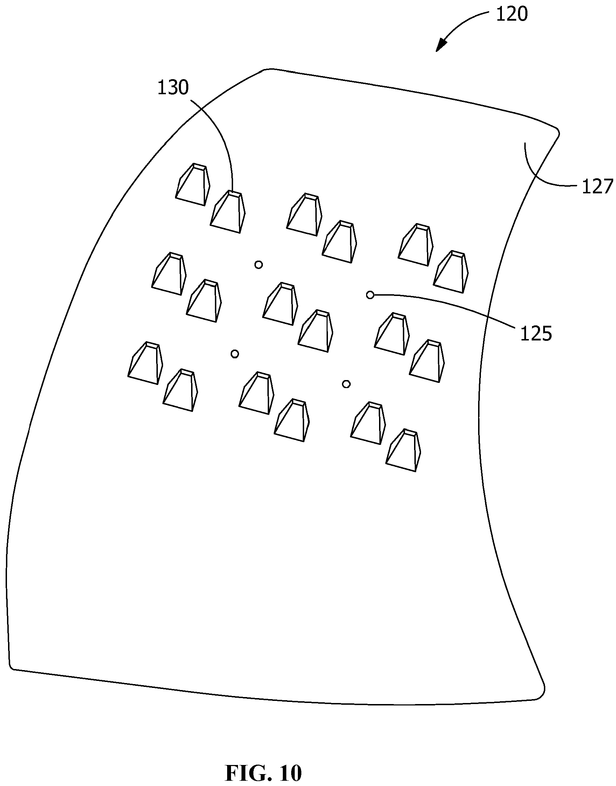

Referring to FIG. 10, in an embodiment, a single row of the impingement cooling holes 125 are offset with a staggered double row of the impingement fins 130 on the first face 127 of the impingement insert 120.

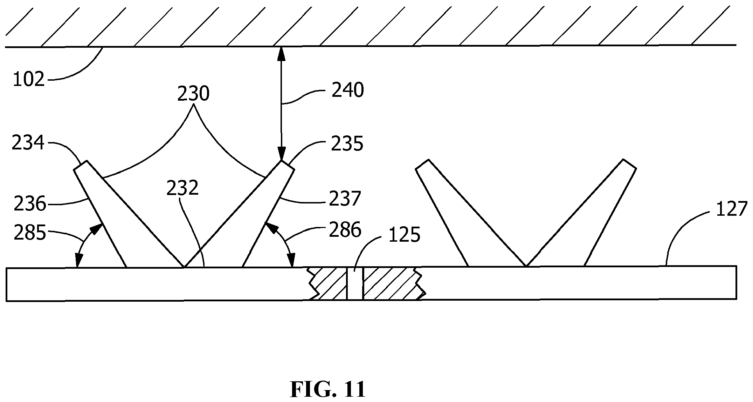

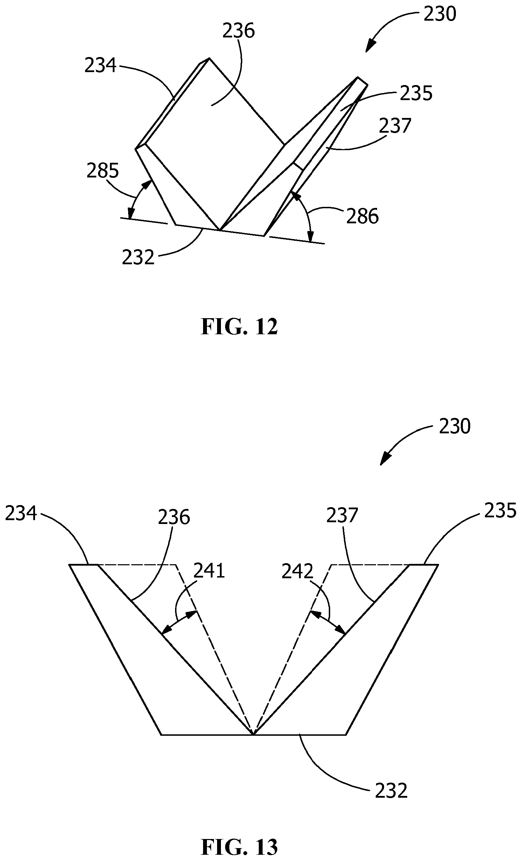

Referring to FIGS. 11, 12, and 13, in an embodiment, the impingement fin 230 includes a base 232, a first tip 234 opposite the base 232, a second tip 235 opposite the base 232, a first side 236 between the base 232 and the first tip 234, and a second side 237 between the base 232 and the second tip 235. The base 232 is rectangular. In an embodiment, a width of the base 232 of the impingement fin 230 is between 0.5 millimeters to 3.0 millimeters. In some embodiments, the base 232, the first tip 234, and the second tip 235 are each rectangular. In some embodiments, the first side 236 may be tapered from the base 232 to the first tip 234 of the impingement fin 230 at a first inside angle 241. In some embodiments, the second side 237 may be tapered from the base 232 to the second tip 235 of the impingement fin 230 at a second inside angle 242. In some embodiments, an angle of the first inside angle 241 is between 3 degrees and 10 degrees, between 4 degrees and 6 degrees, and/or about 5 degrees. In some embodiments, an angle of the second inside angle 242 is between 3 degrees and 10 degrees, between 4 degrees and 6 degrees, and/or about 5 degrees. The first inside angle 241 of the taper of the first side 236 may be the same or different from the second inside angle 242 of the taper of the second side 237.

In some embodiments, the first tip 234 of the impingement fin 230 and the second tip 235 of the impingement fin 230 are spaced apart from the internal surface 102 of the airfoil 101. In an embodiment, a clearance 240 between the first tip 234 of the impingement fin 230 and the second tip 235 of the impingement fin 230 and the internal surface 102 of the airfoil 101 is between 0.5 millimeters and 2.0 millimeters. The clearance between the first tip 234 of the impingement fin 230 and the internal surface 102 of the airfoil 101 and the clearance between the second tip 235 of the impingement fin 230 and the internal surface 102 of the airfoil 101 may be the same or different.

In some embodiments, the impingement fins 230 are attached to the impingement insert 120 in a spaced apart configuration from the cooling holes 125. In some embodiments, the impingement fins 230 extend from the impingement insert 120 at a first outside angle 285 and a second outside angle 286. In some embodiments, the first outside angle 285 is greater than about 30 degrees, greater than about 40 degrees, about 45 degrees, less than about 50 degrees, less than about 60 degrees and combinations thereof. In some embodiments, the second outside angle 286 is greater than about 30 degrees, greater than about 40 degrees, about 45 degrees, less than about 50 degrees, less than about 60 degrees and combinations thereof. The first outside angle 285 may be the same or different as the second outside angle 286.

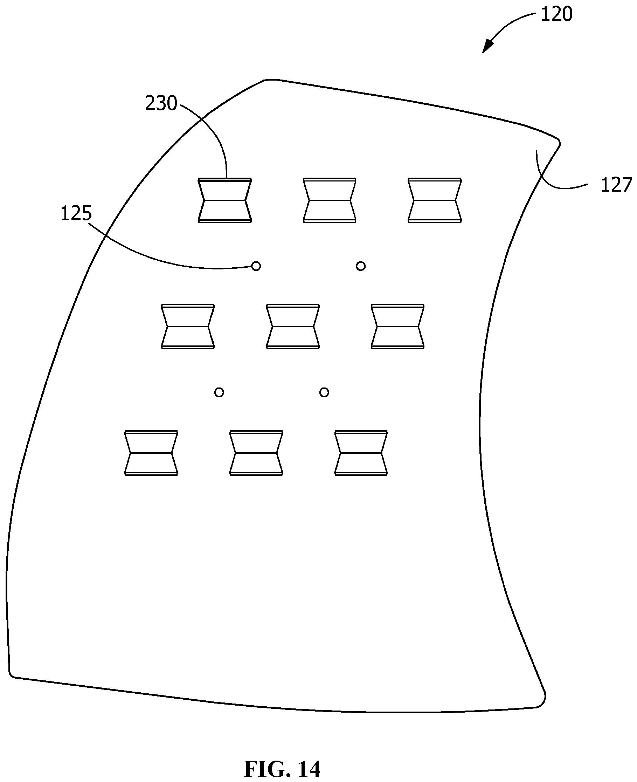

Referring to FIG. 14, in an embodiment, a single row of the impingement cooling holes 125 are offset with a single row of the impingement fins 230 on the first face 127 of the impingement insert 120.

The impingement insert 120 may be formed by any suitable method, including, but not limited to, an additive manufacturing technique. The additive manufacturing technique may include any suitable additive manufacturing technique, including, but not limited to direct metal melting, direct metal laser sintering, selective laser melting, selective laser sintering, electron beam melting, laser metal deposition, binder jet, and combinations thereof.

While the invention has been described with reference to one or more embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed, but that the invention will include all embodiments falling within the scope of the appended claims. In addition, all numerical values identified in the detailed description shall be interpreted as though the precise and approximate values are both expressly identified.

## Claims

1. A component (100) for a turbine comprising:
an airfoil (101) having an internal surface (102), an external surface (103), a leading edge (104), a trailing edge (105), a pressure side (106), a suction side (107), and an internal impingement cavity (110) defined by the internal surface (102); and
an impingement insert (120) secured within the internal impingement cavity (110), comprising:
a plurality of impingement cooling holes (125) spaced along a first face (127) of the impingement insert (120); and
a plurality of impingement fins (130), each impingement fin (130) having a base (132) and a tip (134) opposite the base (132), spaced along the first face (127) of the impingement insert (120); wherein
each impingement fin (130) is spaced apart from the impingement cooling holes (125); and
each impingement fin (130) is tapered from the base (132) to the tip (134) and wherein the base (132) of each impingement fin (130) has a rectangular cross-section.

2. The component (100) of claim 1, wherein each impingement fin (130) forms an angle (185) greater than 30 degrees and less than 60 degrees with the first face (127) of the impingement insert (120).

3. The component (100) of claim 2, wherein the angle (185) is between 40 degrees and 50 degrees.

4. The component (100) of claim 3, wherein the angle (185) is 45 degrees.

5. The component (100) of any preceding claim, wherein a width of the rectangular cross-section of the base (132) is between 0.5 millimeters to 2.0 millimeters.

6. The component (100) of claim 1, wherein each impingement fin (130) is tapered at an angle (241, 242) of between 3 degrees and 10 degrees.

7. The component (100) of claim 6, wherein each impingement fin (130) is tapered at an angle (241, 242) of between 4 degrees and 6 degrees.

8. The component (100) of any preceding claim, wherein each impingement fin (130) is attached to the impingement insert (120) by welding, brazing, laser welding, friction welding, ultrasonic welding, additive manufacturing, and combinations thereof.

9. The component (100) of any of claims 1 to 7, wherein each impingement fin (130) is attached to the impingement insert (120) by additive manufacturing.

10. The component (100) of any preceding claim, wherein a clearance (140) between the tip (134) of each impingement fin (130) and the internal surface (102) of the airfoil (101) is between 0.5 millimeters and 2.0 millimeters.

## Patentansprüche

1. Komponente (100) für eine Turbine, umfassend:
ein Schaufelblatt (101) mit einer Innenoberfläche (102), einer Außenoberfläche (103), einer Vorderkante (104), einer Hinterkante (105), einer Druckseite (106), einer Saugseite (107) und einem internen Prallhohlraum (110), der durch die Innenoberfläche (102) definiert ist; und
einen Pralleinsatz (120), der innerhalb des internen Prallhohlraums (110) befestigt ist, umfassend:
eine Vielzahl von Prallkühllöchern (125), die entlang einer ersten Fläche (127) des Pralleinsatzes (120) beabstandet sind; und
eine Vielzahl von Prallrippen (130), wobei jede Prallrippe (130) eine Basis (132) und eine Spitze (134) gegenüber der Basis (132) aufweist, die entlang der ersten Fläche (127) des Pralleinsatzes (120) beabstandet sind; wobei
jede Prallrippe (130) von den Prallkühllöchern (125) beabstandet ist; und
jede Prallrippe (130) von der Basis (132) zur Spitze (134) verjüngt ist und wobei die Basis (132) jeder Prallrippe (130) einen rechteckigen Querschnitt aufweist.

2. Komponente (100) nach Anspruch 1, wobei jede Prallrippe (130) einen Winkel (185) größer als 30 Grad und kleiner als 60 Grad mit der ersten Fläche (127) des Pralleinsatzes (120) bildet.

3. Komponente (100) nach Anspruch 2, wobei der Winkel (185) zwischen 40 Grad und 50 Grad beträgt.

4. Komponente (100) nach Anspruch 3, wobei der Winkel (185) 45 Grad beträgt.

5. Komponente (100) nach einem der vorstehenden Ansprüche, wobei eine Breite des rechteckigen Querschnitts der Basis (132) zwischen 0,5 Millimeter und 2,0 Millimeter beträgt.

6. Komponente (100) nach Anspruch 1, wobei sich jede Prallrippe (130) in einem Winkel (241, 242) zwischen 3 Grad und 10 Grad verjüngt.

7. Komponente (100) nach Anspruch 6, wobei sich jede Prallrippe (130) in einem Winkel (241, 242) zwischen 4 Grad und 6 Grad verjüngt.

8. Komponente (100) nach einem der vorstehenden Ansprüche, wobei jede Prallrippe (130) durch Schweißen, Hartlöten, Laserschweißen, Reibschweißen, Ultraschallschweißen, additive Fertigung und Kombinationen davon an dem Pralleinsatz (120) angebracht ist.

9. Komponente (100) nach einem der Ansprüche 1 bis 7, wobei jede Prallrippe (130) durch additive Fertigung an dem Pralleinsatz (120) angebracht ist.

10. Komponente (100) nach einem der vorstehenden Ansprüche, wobei ein Abstand (140) zwischen der Spitze (134) jeder Prallrippe (130) und der Innenoberfläche (102) des Schaufelblatts (101) zwischen 0,5 Millimeter und 2,0 Millimeter beträgt.

## Revendications

1. Composant (100) pour une turbine comprenant :
un profil aérodynamique (101) ayant une surface interne (102), une surface externe (103), un bord d'attaque (104), un bord de fuite (105), un côté pression (106), un côté aspiration (107), et une cavité d'impact interne (110) définie par la surface interne (102) ; et
un insert d'impact (120) fixé au sein de la cavité d'impact interne (110), comprenant :
une pluralité de trous de refroidissement d'impact (125) espacés le long d'une première face (127) de l'insert d'impact (120) ; et
une pluralité d'ailettes d'impact (130), chaque ailette d'impact (130) ayant une base (132) et une extrémité (134) opposée à la base (132), espacées le long de la première face (127) de l'insert d'impact (120) ; dans lequel
chaque ailette d'impact (130) est espacée des trous de refroidissement d'impact (125) ; et
chaque ailette d'impact (130) est effilée à partir de la base (132) jusqu'à l'extrémité (134) et dans lequel la base (132) de chaque ailette d'impact (130) a une coupe transversale rectangulaire.

2. Composant (100) selon la revendication 1, dans lequel chaque ailette d'impact (130) forme un angle (185) supérieur à 30 degrés et inférieur à 60 degrés avec la première face (127) de l'insert d'impact (120).

3. Composant (100) selon la revendication 2, dans lequel l'angle (185) est compris entre 40 degrés et 50 degrés.

4. Composant (100) selon la revendication 3, dans lequel l'angle (185) est de 45 degrés.

5. Composant (100) selon une quelconque revendication précédente, dans lequel une largeur de la coupe transversale rectangulaire de la base (132) est comprise entre 0,5 millimètre et 2,0 millimètres.

6. Composant (100) selon la revendication 1, dans lequel chaque ailette d'impact (130) est effilée selon un angle (241, 242) compris entre 3 degrés et 10 degrés.

7. Composant (100) selon la revendication 6, dans lequel chaque ailette d'impact (130) est effilée selon un angle (241, 242) compris entre 4 degrés et 6 degrés.

8. Composant (100) selon une quelconque revendication précédente, dans lequel chaque ailette d'impact (130) est fixée à l'insert d'impact (120) par soudage, brasage, soudage au laser, soudage par friction, soudage par ultrasons, fabrication additive, et des combinaisons de ceux-ci.

9. Composant (100) selon l'une quelconque des revendications 1 à 7, dans lequel chaque ailette d'impact (130) est fixée à l'insert d'impact (120) par fabrication additive.

10. Composant (100) selon une quelconque revendication précédente, dans lequel un dégagement (140) entre l'extrémité (134) de chaque ailette d'impact (130) et la surface interne (102) du profil aérodynamique (101) est compris entre 0,5 millimètre et 2,0 millimètres.
